# EUROPÄISCHE PATENTSCHRIFT

(11) **EP 1 153 704 B1**
(45) Veröffentlichungstag und Bekanntmachung des Hinweises auf die Patenterteilung: **02.11.2005**
(21) Anmeldenummer: 01108436.5
(22) Anmeldetag: 04.04.2001
(51) Int. Cl.: B23Q 1/03, B23Q 1/28, B30B 5/02, B27D 1/08

(54) **Vorrichtung und Verfahren zur Beschichtung von Werkstücken**
Apparatus and process for coating workpieces
Appareil et procédé de revêtement de pièces

(30) Priorität: 12.05.2000 DE 10023243
(43) Veröffentlichungstag der Anmeldung: 14.11.2001
(73) Patentinhaber: Robert Bürkle GmbH, 72250 Freudenstadt (DE)
(72) Erfinder: Dölker, Gerhard, 72270 Baiersbronn-Obertal (DE); Heintel, Markus, 72285 Pfalzgrafenweiler (DE); Renz, Wolfgang, 72250 Freudenstadt (DE)
(74) Vertreter: Blumenröhr, Dietrich

(56) Entgegenhaltungen:
- EP-A- 0 875 334
- EP-A- 0 901 876
- EP-A- 0 979 707
- DE-A- 19 611 754

## Beschreibung

Die Erfindung betrifft eine Vorrichtung zur mehrseitigen Beschichtung von Werkstücken, insbesondere von plattenförmigen Möbelteilen, mittels eines Auflegersystems, umfassend eine Grundplatte mit einer Vielzahl von über die Grundplatte rasterähnlich verteilt angeordneten Hubbolzen, die zwischen einer eingefahrenen Ruheposition und einer ausgefahrenen Beschichtungsposition gegenüber der Grundplatte höhenverstellbar sind, wobei zur Höhenverstellung der Hubbolzen Betätigungsmittel und zur Festlegung einzelner Hubbolzen in der gewünschten Höhenposition Arretiermittel vorgesehen sind. EP-0 875 334-A offenbart eine Vorrichtung gemäß dem Oberbegriff des Anspruchs 1.

Derartige Vorrichtungen werden für Möbelteile verwendet, bei denen nicht nur die Front, sondern auch die umlaufenden seitlichen Kantenflächen mit einem Furnier, einem Folienmaterial oder dergleichen beschichtet werden sollen, wobei dieses Beschichten durch Wärme und Druck in einer Presseneihrichtung erfolgt. Insbesondere um das Beschichten der Kantenflächen störungsfrei zu ermöglichen, müssen die Werkstücke gegenüber der sie tragenden, auf die Gründplätte aufgelegten Palette durch die Hubbolien abgehoben werden. Wesentlich ist es hierbei, dass nur solche Hubbolzen in die ausgefahrene Beschichtungsposition angehoben werden, die vollständig vom Werkstück überdeckt werden, während die nicht bzw. nicht vollständig überdeckten Hubbolzen in der unteren Ruheposition verbleiben sollen, um den Beschichtungsvorgang der Kantenflächen nicht zu beeinträchtigen.

Im Stand der Technik existieren bereits viele Beschreibungen eines solchen Auflegersystems und auch der geschilderten Problematik, nämlich nur sölche Hubbolzen anzuheben bzw nicht abzusenken, die den Beschichtungsprozess der Kantenflächen nicht beeinträchtigen. Beispielhaft wird in diesem Zusammenhang auf die EP 0 979 707 und die EP 0 875 334 verwiesen, aus denen es bereits bekannt ist, ausgehend von einer Gesamtheit in die Beschichtungsposition hochgefahrener Hubbolzen diejenigen Hubbolzen mittels Klinken in der Beschichtungsposition festzulegen, die vollständig vom Werkstück überdeckt sind, während die restlichen Hubbolzen über separate Stellglieder in die untere Ruheposition abgesenkt werden. Zwar können letztendlich die Stellglieder gemeinsam durch Verfahren eines die Stellglieder tragenden Tableaus angehoben bzw. abgesenkt werden; um jedoch die gewünschte Höhenposition auf die Hubbolzen übertragen zu können, müssen die Stellglieder zuvor über für jeden Hubbolzen separate Betätigungsmittel in entweder untere oder obere Positionen gebracht werden, je nach dem in welcher Position der dem jeweiligen Stellglied zugeordnete Hubbolzen zum liegen kommen soll.

Somit weist das bekannte Auflegersystem für jeden Hubbolzen ein eigenes Arretiermittel und auch ein eigenes Betätigungsmittel auf, wobei zur weiteren Vereinfachung alle Betätigungsmittel über eine gemeinsame Hebevorrichtung verfahren werden können.

Hiervon ausgehend liegt der vorliegenden Erfindung die Aufgabe zugrunde, eine Vorrichtung der eingangs genannten Art zur Verfügung zu stellen, die sowohl das Anheben bzw. Absenken als auch das Arretieren der Hubbolzen in vereinfachter Weise ermöglicht und hierdurch den operativen Aufwand eines Auflegersystems reduziert.

Diese Aufgabe wird erfindungsgemäß durch die Vorrichtung nach Anspruch 1 gelöst.

Hierdurch ergibt sich der Vorteil, dass die erfindungsgemäße Vorrichtung mit jeweils einem Betätigungsmittel pro Zeile und einem Arretiermittel pro Reihe auskommt und dennoch dazu in der Lage ist, Werkstücke so aufzulagern, dass sie nur von vollständig überdeckten Hubbolzen getragen werden, während die nicht überdeckten bzw. die nicht vollständig überdeckten Hubbolzen in der nach unten gefahrenen Ruheposition verbleiben. Es ist also nicht nötig, jeden Hubbolzen einzeln anzusteuern und mit separaten Betätigungs- oder Arretiermitteln zu versehen.

Unter dem zeilen- bzw. reihenweisen Anordnen der Hubbolzen ist bei der vorliegenden Erfindung eine Aufgliederung des Hubbolzenrasters in einzelne Gruppen und das gemeinsame Ansteuern dieser Gruppen derart zu verstehen, dass jeder Hubbolzen durch Zugehörigkeit zu einer Gruppe festgelegt bzw. freigegeben werden und durch gleichzeitige Zugehörigkeit zu einer Gruppe betätigt und dadurch angehoben bzw. abgesenkt werden kann. Ein einfacher und übersichtlicher Spezialfall besteht darin, jeden Hubbolzen mit den anderen Hubbolzen seiner Reihe bzw. seiner Zeile fluchtend anzuordnen, wobei die Reihen und die Zeilen rechtwinklig zueinander orientiert sind. Ebenso sind aber auch andere Aufteilungen und Anordnungen der Gruppen bzw. der Hubbolzen möglich. So können die Reihen bzw. Spalten beispielsweise auch zick-zack-förmig verlaufen, unter einem bestimmten Winkel zueinander orientiert sein etc. Auch die Ausdrücke Reihe" bzw. "Spalte" bedeuten keinerlei Festlegung auf Verlauf, Form oder Orientierung der jeweiligen Gruppe.

Während die Betätigungsmittel vorteilhafterweise pneumatisch arbeiten und hierdurch eine problemlose Parallelschaltung aller in einer Zeile vorgesehenen Hubbolzen ermöglichen, ist es bezüglich der Arretiermittel zweckmäßig, wenn diese die Hubbolzen mechanisch beaufschlagen und in der gewünschten Höhenposition festlegen, wobei dieses Festlegen sinnvollerweise über ein einen Formschluss mit dem Hubbolzen eingehendes Blockierelement erfolgt. Als Blockierelement kommt beispielsweise eine horizontal zwischen einer Festlegungsposition und einer Freigabeposition verfahrbare Leiste in Frage, die alle Hubbolzen der gleichen Reihe beaufschlagt. Eine solche Leiste kann beispielsweise schlüssellochförmige Langlöcher für die jeweiligen Hubbolzen aufweisen, so dass der Öffnungsbereich mit größerem Querschnitt die Freigabeposition definiert und somit ein vertikales Verfahren des Hubbolzens zulässt, während der Öffnungsabschnitt mit geringerem Querschnitt dazu dient, einen Formschluss mit einem entsprechenden Abschnitt des Hubbolzens einzugehen, um hierdurch dessen Vertikalbewegung zu unterbinden.

Das zeilenweise Betätigen und das reihenweise Arretieren der Hubbolzen lässt sich in erfindungsgemäßer Weise derart aufeinander abstimmen, dass bei der beschriebenen Vorrichtung die Hubbolzen einer Zeile jeweils gemeinsam betätigt werden und die Hubbolzen einer Reihe jeweils gemeinsam arretiert werden. Wie bereits eingangs geschildert, soll der Beschichtungsprozess der Werkstücke nicht durch seitlich gegenüber dem Werkstück vorstehende Bolzenoberseiten beeinträchtigt werden; hierzu ist es wesentlich, dass tatsächlich nur die vom Werkstück vollständig überdeckten Hubbolzen das Werkstück in der Beschichtungsposition tragen.

Erfindungsgemäß ist somit vorgesehen, dass die Hubbolzen derjenigen Reihen in der Ruheposition festgelegt werden, in denen nicht bzw. nicht vollständig vom Werkstück überdeckte Hubbolzen befindlich sind, und dass anschließend die nicht festgelegten Hubbolzen nur derjenigen Zeilen von der Ruheposition in die Beschichtungsposition angehoben werden, in denen diese nicht festgelegten Hubbolzen vollständig vom Werkstück überdeckt sind. Zunächst erfolgt also das Arretieren der nicht benötigten Hubbolzenreihen, so dass das anschließende pneumatische Betätigen der benötigten HubbolzenZeilen nur zu einem Anheben der noch nicht festgelegten Hubbolzen führt. Die bereits arretierten und nachfolgend pneumatisch beaufschlagten Hubbolzen bleiben in der unteren Ruheposition, so dass sich das pneumatische Betätigen letztendlich nicht auf die gesamten Hubbolzenzeilen auswirkt, sondern nur auf die nicht festgelegten Hubbolzen dieser Zeilen. Es ist unschwer erkennbar, dass sich mit dieser einfachen Verfahrensweise Werkstücke mit unterschiedlichsten Formen auflagern bzw. beschichten lassen.

Für das Bearbeiten von Werkstücken mit komplexeren Formen bzw. von Werkstücken, die zu einem komplizierteren Legebild kombiniert werden sollen, empfiehlt es sich, das Anheben der Hubbolzen nacheinander Reihe für Reihe durchzuführen. Hierbei werden für jede Reihe die Hubbolzen nur derjenigen Zeilen betätigt, in denen ein in dieser Reihe befindlicher anzuhebender Hubbolzen angeordnet ist und anschließend alle Hubbolzen dieser Reihe in ihrer jeweiligen Höhenposition festgelegt. Außerdem empfiehlt es sich, dass vor dem Anheben der Hubbolzen einer Reihe jeweils nur die Hubbolzen dieser Reihe freigegeben werden, während die Hubbolzen der anderen Reihen in ihrer jeweiligen Höhenposition festgelegt bleiben. Dieser Vorgang wird Reihe um Reihe fortgesetzt, bis sich alle anzuhebenden und nach dem Auflegen des Werkstücks überdeckten Hubbolzen in der Beschichtungsposition befinden.

Wird festgestellt, dass die Werkstücke so aufgelegt sind, dass eine Anzahl von Reihen gleichzeitig überdeckt sind, so kann das Freigeben, Anheben und Festlegen der Hubbolzen mehrerer Reihen mit in den gleichen Zeilen angeordneten anzuhebenden Hubbolzen gleichzeitig erfolgen, was eine Zeitersparnis beim Höhenpositionieren der Hubbolzen bedeutet.

Bei diesem Verfahren ist es an sich einerlei, ob die Werkstücke vor oder nach dem Hochfahren der Hubbolzen in die Beschichtungsposition auf die Hubbolzen aufgelegt werden, da weder der Betätigungs- noch der Festlegungsprozess von einem aufgelegten Werkstück abhängen bzw. beeinflusst werden. Allerdings bietet die zweite Variante des nachträglichen Auflegens dadurch einen wesentlichen Vorteil, dass das Werkstück nach dem Auflegen und vor dem Beschichten nur gleichförmigen Bewegungen unterworfen ist, ohne dass es hierbei zu Schrägstellungen, einem Verkippen etc. kommen kann. Im Gegensatz dazu würde bei dem reihenweisen Hochfahren der Hubbolzen, auf die bereits das Werkstück aufgelegt ist, das Werkstück nicht parallel, also in steter Horizontalstellung angehoben, sondern sukzessive, d.h. von einem Rand ausgehend durch die dortigen Hubbolzen zunächst in Schrägstellung gebracht und erst nach dem Hochfahren fast aller Hubbolzen in die gewünschte horizontale Beschichtungsposition überführt. Hierbei kann es zu unkontrollierbaren Kippbewegungen und u.U. sogar zu Lageänderungen kommen.

Das bevorzugte Vorgehen steht im Gegensatz zu einem Teil des Standes der Technik, bei dem erst das aufgelegte Werkstück dazu führt, dass nicht verwendbare Hubbolzen nach unten in die Ruheposition verfahren. Hierzu sind an den Hubbolzen entweder Sensoren oder pneumatische in Richtung der Hubbolzenoberseite geöffnete Leitungsabschnitte vorgesehen, die die nicht benötigten Hubbolzen identifizieren und deren Absenken auslösen.

Das Identifizieren der nicht benötigten Hubbolzen wird gemäß der vorliegenden Erfindung dadurch ausgeführt, dass das Werkstück vor dem Betätigen bzw. vor dem Arretieren der Hubbolzen hinsichtlich seiner Form, Abmessung und Lage erfasst wird, wozu eine Abtastvorrichtung vorgesehen ist, die eine Werkstückinformation über die Werkstückdaten erstellt, und dass die Betätigungsmittel und die Arretiermittel unter Berücksichtigung der Werkstückinformation aktivierbar sind. Am einfachsten ist es, wenn die Abtastvorrichtung das Werkstück optisch abtastet, was beispielsweise seitlich beabstandet außerhalb der Presse vor dem Transport des Werkstückes in die Presse erfolgen kann, während das Auflagersystem vorzugsweise in der Presse angeordnet ist, aber auch in der Palette integriert sein könnte.

Ist den Betätigungsmitteln und den Arretiermitteln eine Steuervorrichtung vorgeschaltet, die die Betätigungsmittel und die Arretiermittel in Abhängigkeit der Werkstückinformation steuert, so lässt sich tatsächlich das Anheben bzw. Absenken der Hubbolzen in Abhängigkeit von der Form des Werkstücks erzielen, selbst dann, wenn das Werkstück noch gar nicht auf die Hubbolzen aufgelegt ist. Hierzu aktiviert die Steuervorrichtung nur diejenigen Betätigungsmittel, in deren Zeile zumindest ein vollständig vom später aufgelegten Werkstück überdeckter Hubbolzen befindlich ist, wobei die Steuervorrichtung vor dem Aktivieren der Betätigungsmittel nur die Arretiermittel im Sinne einer Festlegung der Hubbolzen ansteuert, in deren Reihe unvollständig oder nicht vom Werkstück überdeckte Hubbolzen befindlich sind.

Anstelle eine Abtastvorrichtung zur Berücksichtigung der Werkstückdaten zu verwenden, ist es ebenso möglich, dass die Steuereinrichtung ein bestimmtes, an die zu beschichtenden Werkstücke angepasstes Belegungsbild aus einem Optimierungsprogramm vorgibt und die Hubbolzen bzw. deren Betätigungs- und Arretiermittel entsprechend diesem Belegungsbild ansteuert. Anschließend können Werkstücke entweder automatisch oder durch eine Bedienungsperson auf die hochgefahrenen Hubbolzen aufgelegt werden. Diese Vorgehensweise empfiehlt sich insbesondere bei größeren Serien, wobei die Hubbolzen zweckmäßigerweise auch für mehrere Beschichtungszyklen mit gleichbleibendem Belegungsbild in ihrer jeweiligen Höhenposition verbleiben können. Hierdurch läßt sich die Taktfrequenz der Beschichtungsvorgänge erhöhen und die Beanspruchung bzw. der Verschleiß des Auflegersystems reduzieren.

Gemäß der vorliegenden Erfindung wird außerdem ein gesamter Verfahrensablauf zur Bearbeitung von Werkstücken, insbesondere zur Handhabung von zu beschichtenden plattenförmigen Möbelteilen vorgeschlagen, der die folgenden Verfahrensschritte umfasst:
a) Abtasten des zu bearbeitenden Werkstücks hinsichtlich seiner Form und/oder Abmessung,
b) Erzeugen einer Werkstückinformation aus den Abtastdaten,
c) Ansteuern eines Auflegersystems mit einer Vielzahl von rasterförmigen in Reihen und Zeilenangeordneten und zum Auflagern des Werkstücks vor und/oder während dessen Bearbeitens dienenden Hubbolzen mit Hilfe der Werkstückinformation derart, dass die vom Werkstück nach dessen Auflegen vollständig überdeckten Hubbolzen reihenweise durch jeweils ein auf alle Hubbolzen einer Zeile einwirkendes Betätigungsmittel von ihrer unteren Ruheposition in ihre obere Beschichtungsposition angehoben werden,
   c1) wobei für jede Reihe die Betätigungsmittel derjenigen Zeilen aktiviert werden, in denen ein in dieser Reihe befindlicher anzuhebender Hubbolzen angeordnet ist, und
   c2) wobei anschließend alle Hubbolzen dieser Reihe in ihrer jeweiligen Höhenposition durch ein gemeinsames Arretiermittel festgelegt werden, und
   c3) wobei Verfahrensschritt c1) und anschließend Verfahrensschritt c2) nacheinander für alle weiteren Reihen durchgeführt wird, in denen sich ein anzuhebender Hubbolzen befindet,
d) Auflegen des Werkstücks auf die angehobenen Hubbolzen, und
e) Beschichten des Werkstücks, insbesondere des plattenförmigen Möbelteils.

Dieser Ablauf wird zweckmäßigerweise dadurch ergänzt, dass vor Durchführung des Verfahrensschritts c1) für eine Reihe die Hubbolzen nur dieser Reihe durch das zugehörige gemeinsame Arretiermittel freigegeben werden, während die Hubbolzen der restlichen Reihen durch deren Arretiermittel festgelegt bleiben. Hierbei erfolgt das reihenweise Freigeben bzw. Betätigen der Hubbolzen sinnvollerweise nur dann, wenn zumindest ein Hubbolzen dieser Reihe vollständig vom Werkstück überdeckt ist und angehoben werden muß. Das zeilenweise Betätigen der Hubbolzen wird ebenso dann durchgeführt, wenn zumindest ein Hubbolzen vollständig vom Werkstück überdeckt ist. In diesem Fall liegen die anderen Hubbolzen in Reihen, die arretiert worden sind, wodurch sich das Betätigen nicht auf diese arretierten Hubbolzen auswirkt.

Weitere Merkmale und Vorteile der vorliegenden Erfindung ergeben sich aus der nachfolgenden Beschreibung eines Ausführungsbeispiels anhand der Zeichnung; hierbei zeigen:
- Figur 1: eine erfindungsgemäße Vorrichtung zur Beschichtung von Werkstücken in schematischer Seitenansicht;
- Figur 2: eine Auflegereinrichtung als Teil der Vorrichtung aus Figur 1 in schematischer Draufsicht;
- Figur 3: die Auflegereinrichtung aus Figur 2 in Draufsicht nach Arretieren verschiedener Reihen von Hubbolzen;
- Figur 4: die Auflegervorrichtung aus Figur 3 nach Betätigen verschiedener Zeilen von Hubbolzen; und
- Figuren 5-9: die Auflegervorrichtung in entlang einer Reihe von Hubbolzen geschnittener Seitenansicht in verschiedenen Verfahrensschritten.

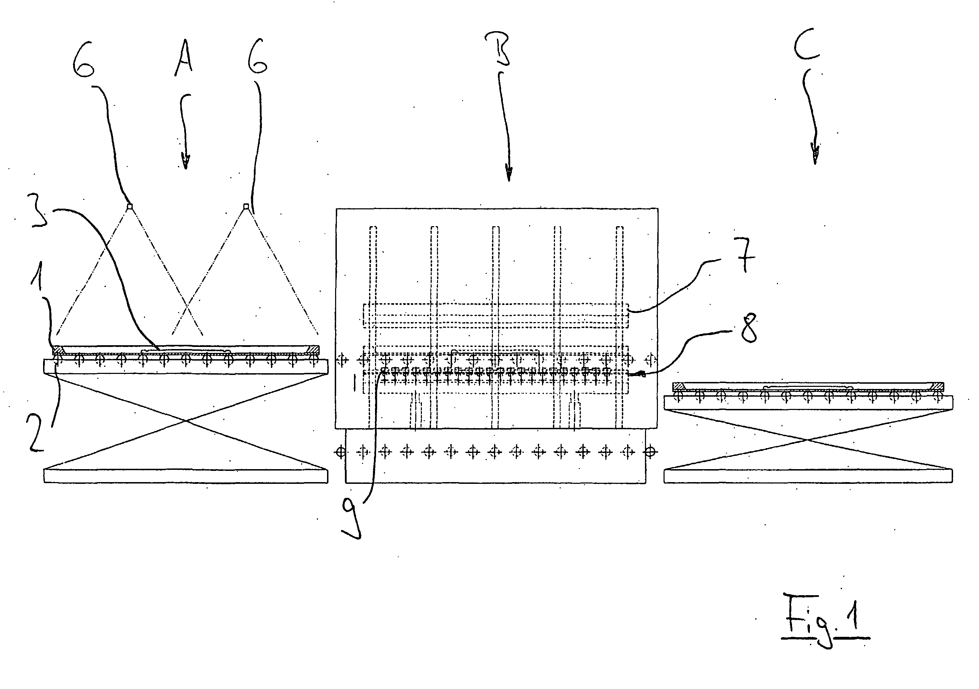

Figur 1 zeigt drei Stationen, die ein zu beschichtendes Werkstück durchläuft und zwar einen (in Figur 1 links angeordneten) Legeplatz A, eine (in Figur 1 in der Bildmitte angeordnete) Beschichtungspresse B und eine (in Figur 1 rechts angeordnete) Entleerungsstation C. Innerhalb des Legeplatzes ist eine Palette 1 auf einer Transportvorrichtung 2 in Form einer Rollenbahn angeordnet und trägt ein zu beschichtendes Werkstück in Form eines plattenförmigen Möbelteils 3. Im oberen Bereich des Legeplatzes A ist eine aus zwei (oder mehreren) optischen Sensoren bestehende Abtastvorrichtung 6 vorgesehen, die die Form, die Abmessungen und die Position des Werkstücks erfasst und an eine (in Figur 1 nicht dargestellte) Steuervorrichtung weitergibt, welche die nachfolgend erläuterten Hubbolzen steuert. Nach dem Abtastvorgang wird die Beschichtungsfolie aufgelegt.

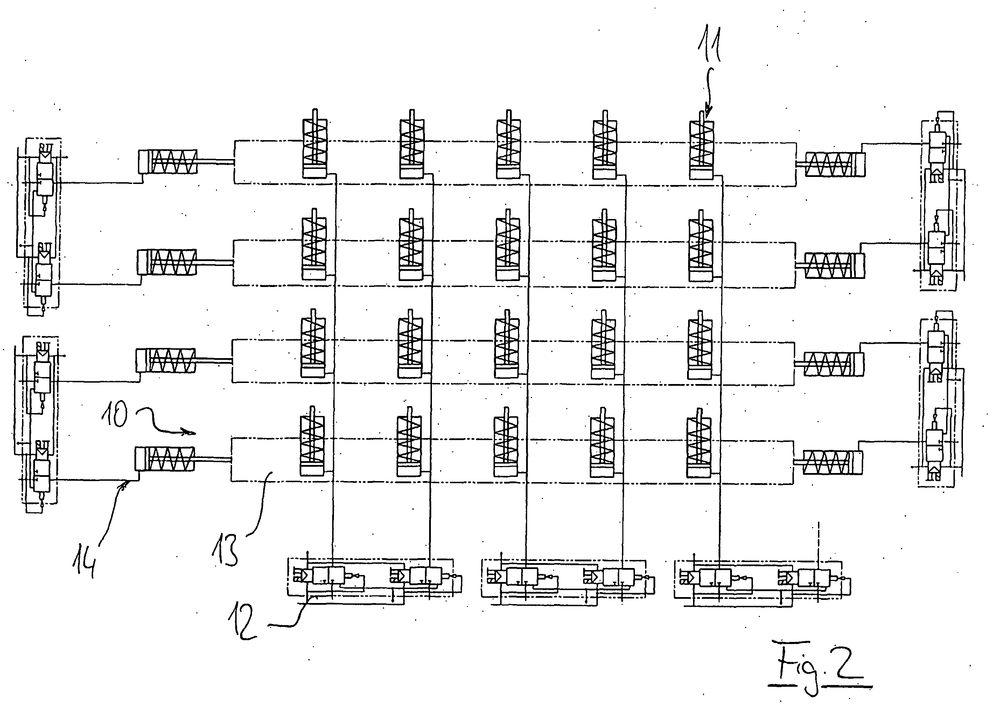

Zwar ist in Figur 1 nur ein Möbelteil 3 innerhalb der Palette 1 dargestellt, tatsächlich wird jedoch versucht, möglichst viele Möbelteile auf einer Palette anzuordnen und gleichzeitig zu beschichten, wobei dann diese Möbelteile einen entsprechenden Abstand zueinander aufweisen müssen, um auch das Beschichten der Kantenflächen zu ermöglichen. Nachdem nun durch die Abtastvorrichtung 6 die Form, Abmessungen und Position des Möbelteils bzw. der Möbelteile erfasst worden ist, wird hieraus ein Legebild erstellt und mit dem Raster der Hubbolzen 9 verglichen, die in Figur 1 in der Presse B angedeutet sind. Wie nachfolgend anhand der Figuren 2 - 9 näher erläutert wird, sorgt die Steuervorrichtung dafür, dass nur diejenigen Hubbolzen 9 oben stehen, auf die das Werkstück 3 nach dem Transport in die Presse B aufgelegt wird und die dann vom Werkstück vollständig überdeckt werden. Insbesondere sollen solche Hubbolzen keinen Kontakt mit dem Werkstück erhalten, die nur teilweise vom Werkstück überdeckt werden.

Der Transportvorgang vom Legeplatz A in die Presse B erfolgt genauer gesagt über die Transportvorrichtung 2, also eine Rollenbahn, die die Palette 1 horizontal in die Presse befördert und sie dort genau so positioniert, dass in der Palette 1 eingebrachte Öffnungen 4, deren Form und Position den Abmessungen und dem Raster der Hubbolzen entsprechen, exakt mit ihren Öffnungen oberhalb der Hubbolzen zum Liegen kommt.

Bevor die Palette 1 nach unten auf eine die Hubbolzen tragende Grundplatte 5 abgesenkt wird, um das Werkstück 3 auf die Hubbolzen aufzulegen, werden nur diejenigen Hubbolzen in ihre Beschichtungsposition nach oben ausgefahren, die vom Werkstück vollständig überdeckt werden. Ein Absenken der Palette 1 auf die die Hubbolzen tragende Grundplatte 5 führt dazu, dass die Hubbolzen durch die Öffnungen der Palette hervorragen und dass das Werkstück in Kontakt mit den in der Beschichtungsposition befindlichen Hubbolzen gelangt und auf diese aufgelegt wird.

Anschließend kann der Beschichtungsvorgang in bekannter Weise durch Hitze und Druck - gegebenenfalls mit einer nicht dargestellten Membran - durchgeführt werden. Nach dem Beschichtungsvorgang wird die Palette 1 angehoben, so dass das Werkstück auf der Palette zum Liegen kommt und die Transportvorrichtung 2 die Palette in Horizontalrichtung aus der Presse in die Entleerungsposition befördert, wo die Werkstücke 3 durch Aufschneiden der Folie vereinzelt und entfernt werden.

Alternativ kann das die Grundplatte tragende Pressenunterteil abgesenkt werden, um das Ein- und Ausfahren der Palette zu ermöglichen, wobei die Palette nach der Beschichtung in Transporthöhe stehen bleibt.

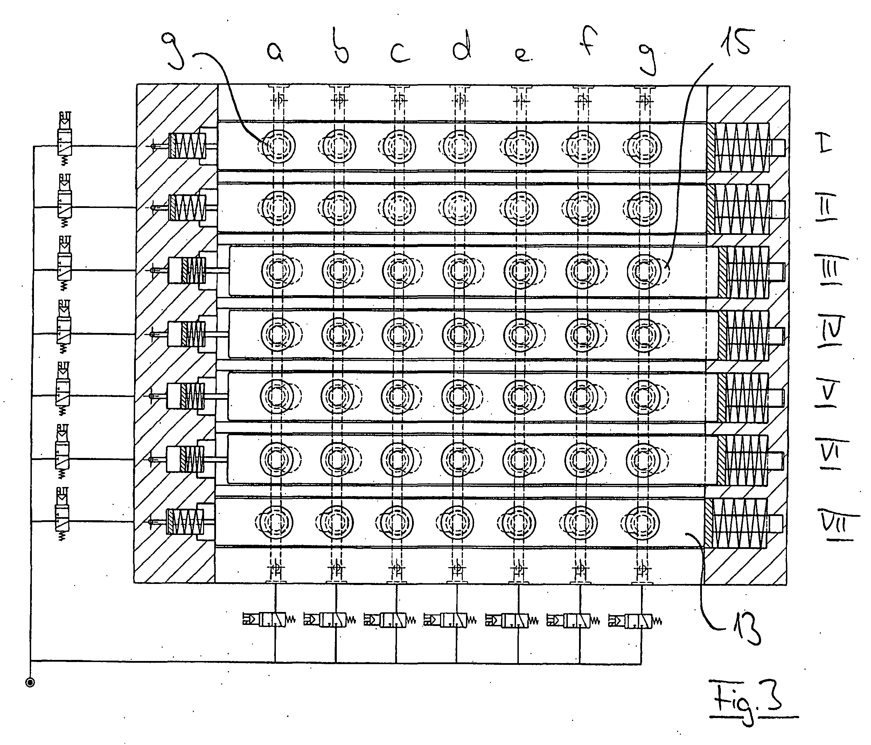

Figur 2 zeigt einen Teil des Innenlebens der Presse B in schematischer Draufsicht und stellt die aus dem erfindungsgemäßen Auflegersystem 8 bestehende Beschichtungsvorrichtung für Möbelteile im Detail dar. Hierbei ist auch zu erkennen, dass die Hubbolzen 9 in Reihen 10 und Zeilen 11 gruppiert sind, wobei sich jeweils die Reihen parallel zueinander erstrecken und auch die Zeilen parallel zueinander erstrecken und zwischen den Reihen und den Zeilen ein rechter Winkel gebildet ist, aber ebenso natürlich auch ein schiefer Winkel möglich ist. Zur Betätigung der Hubbolzen 9, also um diese anzuheben bzw. abzusenken, sind pneumatische Betätigungsmittel 12 vorgesehen, die jeweils alle Hubbolzen einer gemeinsamen Zeile beaufschlagen; ein gezieltes Betätigen einzelner Hubbolzen ist durch die pneumatische Betätigungsvorrichtung nicht möglich und ist auf der anderen Seite aber auch durch die erfindungsgemäße Ausgestaltung des Auflegersystems 8 gar nicht nötig. Denn alle Hubbolzen einer Reihe 10 lassen sich über Arretiermittel 13 in der jeweiligen Position festlegen, wobei ein Arretiermittel 13 beispielsweise aus einer aus Figur 3 besser erkennbaren Leiste bestehen kann, welche schlüssellochförmige Öffnungen 15 zum Freigeben bzw. Festlegen der Hubbolzen aufweist. Die Leiste 13 wird über eigene Betätigungsmittel 14 horizontal zwischen einer Freigabe- und einer Festlegungsposition verschoben.

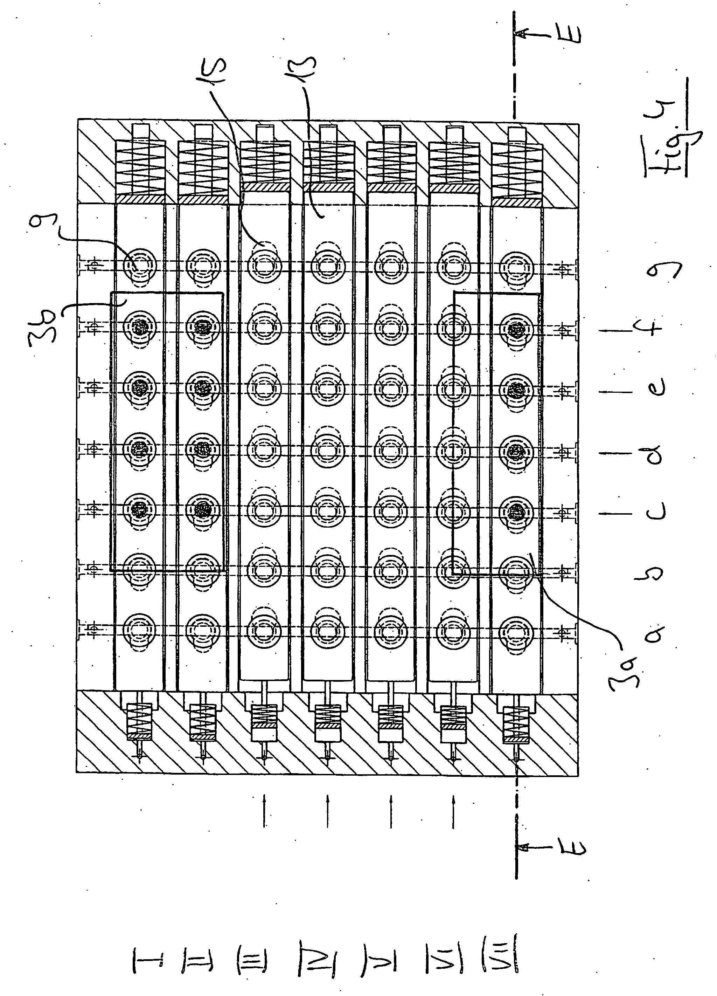

Figur 3 stellt in Draufsicht eine Vielzahl von Hubbolzen 9 dar, die in Reihen I bis VII und Zeilen a - g angeordnet sind. Bei der Konstellation gemäß Figur 3 sind die Arretiermittel 13 der Reihen III, IV, V und VI in die (bezogen auf Figur 3 und 4) rechte Festlegungsposition verfahren, in der die Öffnungen 15 einer Leiste mit einem kleineren Öffnungsquerschnitt die Hubbolzen derart beaufschlagen, dass sie in Vertikalrichtung formschlüssig festgelegt sind und von einer Vertikalbewegung abgehalten werden. Im Gegensatz dazu sind die Leisten der Reihen I, II und VII in der linken Freigabeposition angeordnet, in der die Öffnungen 15 mit einem vergrößerten Querschnittsbereich die sich durch sie erstreckenden Hubbolzen 9 ohne Formschluss umgeben und deren Vertikalbewegung nicht behindern.

Folglich kann ein zeilenweises Betätigen der Reihen c, d, e und f gemäß Figur 4 nur zu einem Anheben der Hubbolzen mit den Koordinaten I c, I d, I e, I f, II c bis II f und VII c bis VII f führen, während die anderen Hubbolzen der Zeilen c - f über die ihnen zugeordneten Leisten 13 in der unteren Ruheposition festgelegt sind. Die gemäß Figur 4 hochgefahrenen Hubbolzen 9 dienen somit zur Auflagerung zweier Werkstücke 3a, 3b, wie sie in Figur 4 angedeutet sind. Hieraus lässt sich entnehmen, dass tatsächlich nur solche Hubbolzen 9 nach oben verfahren sind, die von den Werkstücken 3a, 3b vollständig überdeckt sind, während die nur zum Teil überdeckten Hubbolzen in der unteren Ruhestellung verbleiben, um das Beschichten ihrer Kantenflächen nicht zu behindern. Beispielhaft sei hierbei auf die Hubbolzen der Zeile b verwiesen, die teilweise gegenüber der Werkstückkontur vorstehen und somit in der unteren Ruheposition verbleiben müssen.

Bei dieser Gelegenheit sei angemerkt, dass die Hubbolzen 9 tatsächlich viel dichter gepackt sind als in der schematischen Figur 4 dargestellt ist, so dass stets eine stabile Abstützung bzw. Auflage gewährleistet ist.

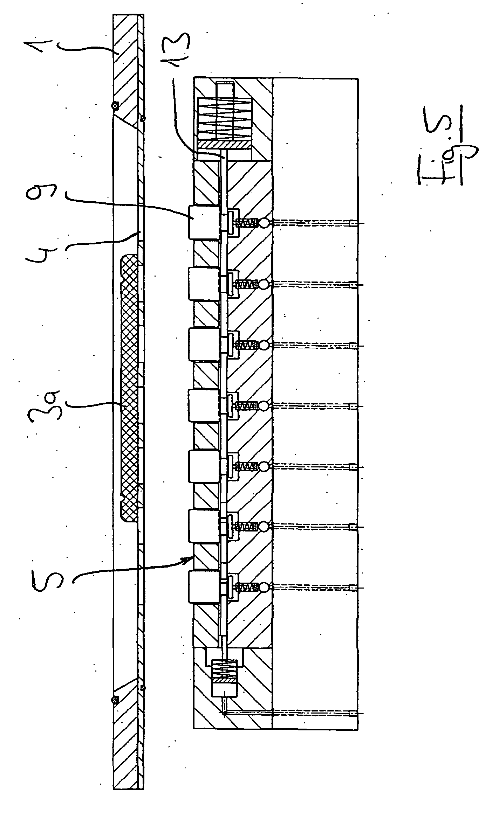

Die Figuren 5 - 9 zeigen nun einzelne Verfahrensschritte beim Handhaben des Werkstücks 3a anhand eines Schnittes entlang der Reihe VII und entlang einer Schnittebene E - E. In der ersten Phase in Figur 5 befinden sich alle Hubbolzen 9 in der unteren Ruheposition und werden von der Leiste 13 dort festgehalten. In dieser Ruheposition stehen die Hubbolzen nur geringfügig gegenüber der Grundplatte 5 nach oben vor. Die Palette 1 mit dem Werkstück 3a befindet sich oberhalb der Hubbolzen beabstandet von diesen.

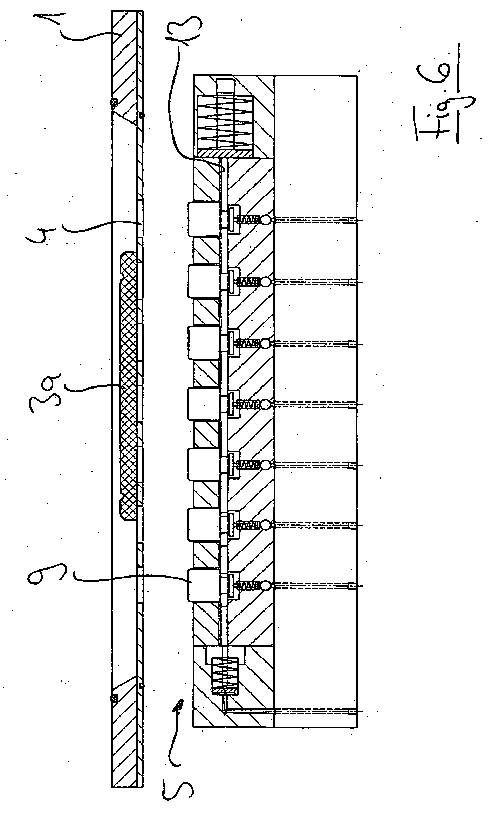

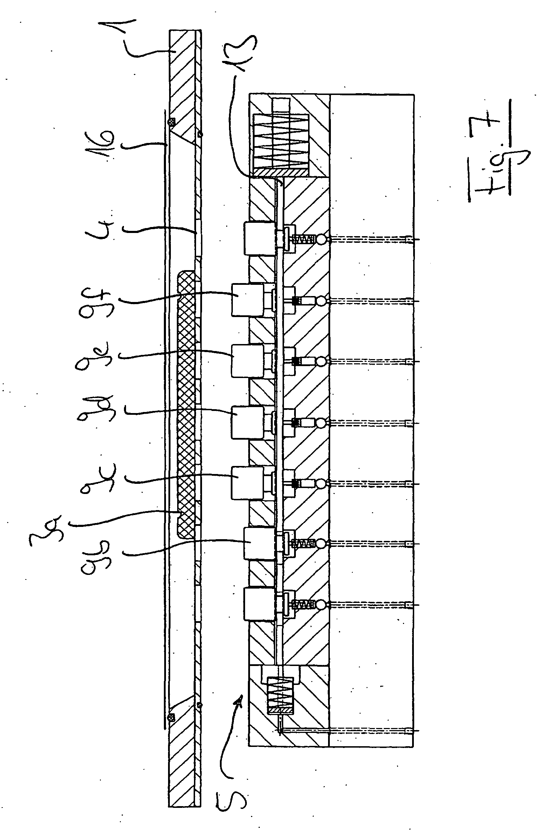

Figur 6 zeigt wie das Arretiermittel in Form der Leiste 13 durch horizontales Verfahren in die Freigabeposition verschoben ist und den Formschluss mit den Hubbolzen aufhebt. Gemäß der Konstellation aus Figur 4 werden anschließend - wie aus Figur 7 ersichtlich ist - die Hubbolzen der Zeilen c - f pneumatisch betätigt, was zu einem Anheben der Hubbolzen 9c, 9d, 9e und 9f führt. Die ebenfalls nicht arretierten Hubbolzen 9a, 9b und 9g wurden nicht betätigt und bleiben somit in der unteren Ruheposition.

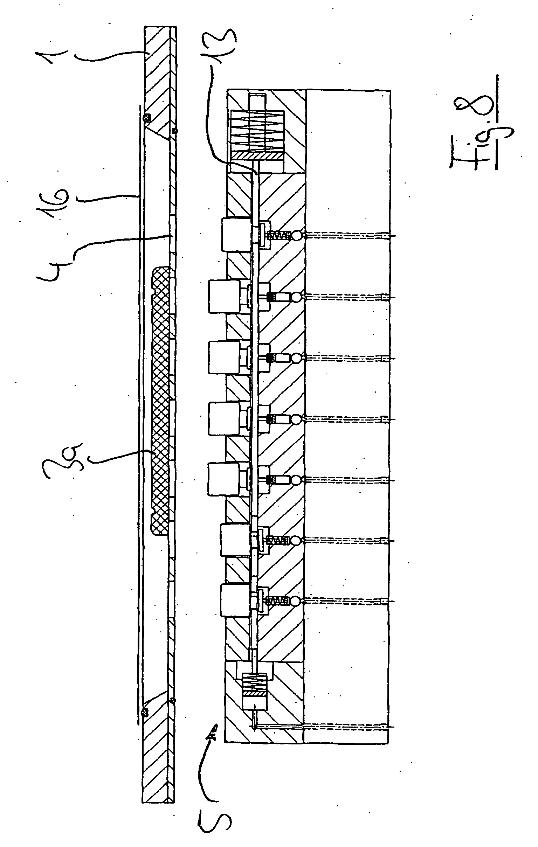

Gemäß Figur 8 wird die Leiste 13 wieder in die Verriegelungsstellung verfahren, geht dort einen Formschluss mit allen Hubbolzen ihrer Reihe ein und legt somit die Hubbolzen 9c - 9f in der oberen Beschichtungsposition fest. Die pneumatische Betätigung dieser Hubbolzen kann aufgrund der nun definierten Höhenposition aufgehoben werden.

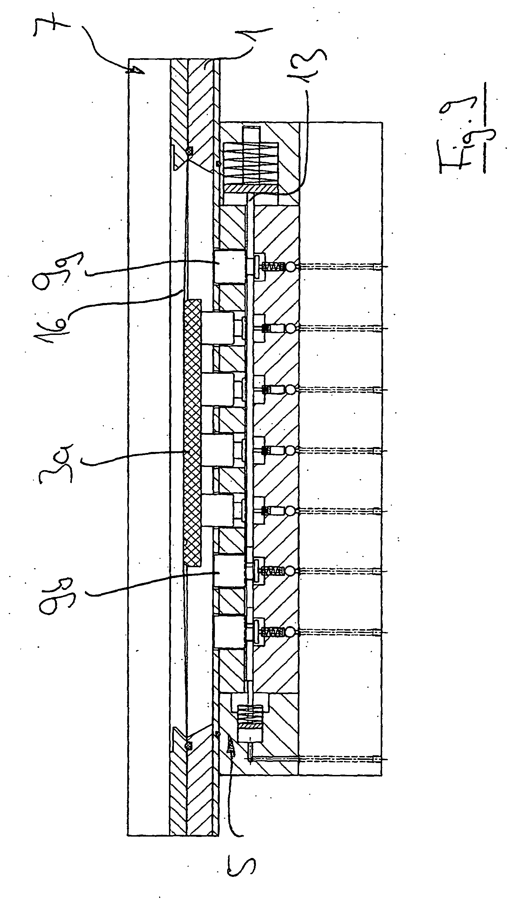

Anschließend wird - gemäß Figur 9 - die Palette 1 zusammen mit dem Werkstück und der auf ihr angeordneten Beschichtungsfolie 16 vertikal nach unten verfahren, wobei die Hubbolzen in die in der Palette vorgesehenen Öffnungen 4 eintauchen und die in der Beschichtungsposition befindlichen Hubbolzen 9c - 9f durch diese Öffnungen 4 hindurchragen, die Unterseite des Werkstücks 3a beaufschlagen und dieses gegenüber der weiter nach unten verfahrenen Palette beabstanden. Diese Beabstandung ist so groß, dass das Werkstück ausreichend frei gegenüber dem Plattenboden ist. Gleichzeitig wird die Presse geschlossen, wobei die Palette 1 nach oben und nach unten abgedichtet ist, um für den nachfolgenden Beschichtungsvorgang eine ausreichend druckdichte Beschichtungskammer zur Verfügung zu stellen.

Während des Beschichtens legt sich die Beschichtungsfolie 16 auch um die vertikalen Kantenflächen des Werkstücks 3a und wird dort dauerhaft festgelegt. Gerade aus der Darstellung in Figur 9 ist unschwer erkennbar, dass der in der unteren Ruheposition befindliche Hubbolzen 9b den Beschichtungsvorgang der linken vertikalen Kantenfläche beeinträchtigen würde, wenn er nach oben verfahren wäre und seitlich gegenüber dem Werkstück 3a und seiner Kantenfläche vorstehen würde. Denn dann würde selbst ein noch so großer Druck nicht ausreichen, um die Kantenfläche bis in ihren unteren Bereich zu beschichten.

Zusammenfassend bietet die vorliegende Erfindung den wesentlichen Vorteil, dass nicht jeder einzelne Hubbolzen angesteuert werden muss, sondern dass die Hubbolzen vielmehr reihenweise und zeilenweise betätigt bzw. arretiert werden können. Hierdurch erhält man eine Einsparung von Betätigungs- bzw. Arretiermitteln in erheblichem Ausmaß und reduziert den apparativen Aufwand der erfindungsgemäßen Betätigungsvorrichtung entsprechend stark.

## Patentansprüche

1. Vorrichtung zur mehrseitigen Beschichtung von Werkstücken, insbesondere von plattenförmigen Möbelteilen, mittels eines Auflegersystems, umfassend eine Grundplatte (5) mit einer Vielzahl von über die Grundplatte rasterähnlich verteilt angeordneten Hubbolzen (9), die zwischen einer eingefahrenen Ruheposition und einer ausgefahrenen Beschichtungsposition gegenüber der Grundplatte höhenverstellbar sind, wobei zur Höhenverstellung der Hubbolzen Betätigungsmittel (12) und zur Festlegung einzelner Hubbolzen in der gewünschten Höhenposition Arretiermittel (13) vorgesehen sind, wobei die rasterähnlich verteilten Hubbolzen in Reihen (10) und Zeilen (11) angeordnet sind derart, dass jeder Hubbolzen jeweils einer Reihe und einer Zeile zugeordnet ist, und jeder Reihe ein separat aktivierbares und alle Hubbolzen der Reihe beaufschlagendes Arretiermittel (13) zugeordnet ist,
**dadurch gekennzeichnet, dass** jeder Zeile ein separat aktivierbares und alle Hubbolzen der Zeile beaufschlagendes Betätigungsmittel (12) zugeordnet ist.

2. Vorrichtung zur Beschichtung von plattenförmigen Werkstücken nach Anspruch 1,
**dadurch gekennzeichnet,**
**dass** das Betätigungsmittel (12) pneumatisch arbeitet.

3. Vorrichtung zur Beschichtung von plattenförmigen Werkstücken nach einem der vorstehenden Ansprüche,
**dadurch gekennzeichnet,**
**dass** das Arretiermittel (13) die Hubbolzen (9) mechanisch beaufschlagt und in der gewünschten Höhenposition festlegt.

4. Vorrichtung zur Beschichtung von plattenförmigen Werkstücken nach Anspruch 3,
**dadurch gekennzeichnet,**
**dass** das Festlegen der Hubbolzen (9) durch das Arretiermittel (13) über ein einen Formschluss mit den Hubbolzen eingehendes Blockierelement erfolgt.

5. Vorrichtung zur Beschichtung von plattenförmigen Werkstücken nach Anspruch 4,
**dadurch gekennzeichnet,**
**dass** das Blockierelement (13) aus einer alle Hubbolzen (9) der gleichen Reihe (10) beaufschlagenden, horizontal zwischen einer Festlegungsposition und einer Freigabeposition verfahrbaren Leiste besteht.

6. Vorrichtung zur Beschichtung von plattenförmigen Werkstücken nach einem der vorstehenden Ansprüche,
**dadurch gekennzeichnet,**
**dass** jeder Hubbolzen (9) mit den anderen Hubbolzen seiner Reihe bzw. seiner Zeile fluchtend angeordnet ist.

7. Vorrichtung zur Beschichtung von plattenförmigen Werkstücken nach einem der vorstehenden Ansprüche,
**dadurch gekennzeichnet,**
**dass** das Auflegersystem (8) mit den Hubbolzen (9) in einer Presse angeordnet ist.

8. Vorrichtung zur Beschichtung von plattenförmigen Werkstücken nach einem der vorstehenden Ansprüche,
**dadurch gekennzeichnet,**
**dass** das die Hubbolzen (9) in der Palette (1) integriert sind.

9. Vorrichtung zur Beschichtung von plattenförmigen Werkstücken nach einem der vorstehenden Ansprüche,
**dadurch gekennzeichnet,**
**dass** zusätzlich eine Abtastvorrichtung (6) vorgesehen ist, die die Form, Abmessung und/oder Lage des zu bearbeitenden Werkstückes (3) abtastet und hieraus eine Werkstückinformation erstellt, und dass die Betätigungsmittel (12) und die Arretiermittel (13) unter Berücksichtigung der Werkstückinformation aktivierbar sind.

10. Vorrichtung zur Beschichtung von plattenförmigen Werkstücken nach Anspruch 9,
**dadurch gekennzeichnet,**
**dass** die Abtastvorrichtung (6) das Werkstück (3) optisch abtastet.

11. Vorrichtung zur Beschichtung von plattenförmigen Werkstücken nach Anspruch 9 oder 10,
**dadurch gekennzeichnet,**
**dass** die Abtastvorrichtung (6) außerhalb einer Presse (B) angeordnet ist und das Werkstück (3) vor dem Transport in die Presse abtastet.

12. Vorrichtung zur Beschichtung von plattenförmigen Werkstücken nach einem der vorstehenden Ansprüche,
**dadurch gekennzeichnet,**
**dass** eine Optimierungsvorrichtung vorgesehen ist, die unter Berücksichtigung einer die Form, die Abmessungen und/oder die Lage des zu bearbeitenden Werkstückes berücksichtigenden Werkstückinformation ein Belegungsbild errechnet, und
**dass** die Betätigungsmittel und die Arretiermittel unter Berücksichtigung dieses Belegungsbildes aktivierbar sind.

13. Vorrichtung zur Beschichtung von plattenförmigen Werkstücken nach einem der Ansprüche 9 bis 11,
**dadurch gekennzeichnet,**
**dass** den Betätigungsmitteln (12) und den Arretiermitteln (13) eine Steuervorrichtung vorgeschaltet ist, die die Betätigungsmittel und die Arretiermittel in Abhängigkeit der Werkstückinformation steuert.

14. Vorrichtung zur Beschichtung von plattenförmigen Werkstücken nach Anspruch 13,
**dadurch gekennzeichnet,**
**dass** die Steuervorrichtung nur die Betätigungsmittel (12) aktiviert, in deren Zeile (11) vollständig vom Werkstück überdeckte Hubbolzen (9) befindlich sind.

15. Vorrichtung zur Beschichtung von plattenförmigen Werkstücken nach Anspruch 13 oder 14,
**dadurch gekennzeichnet,**
**dass** die Steuervorrichtung nach dem Aktivieren der Betätigungsmittel (12) die Arretiermittel (13) im Sinne einer Festlegung der Hubbolzen aktiviert, in deren Reihe (10) vollständig vom Werkstück überdeckte Hubbolzen (9) befindlich sind.

16. Verfahren zur Verwendung der Vorrichtung nach Anspruch 1,
**dadurch gekennzeichnet,**
**dass** die Hubbolzen (9) einer Zeile (a - g) jeweils gemeinsam betätigt werden, und
**dass** die Hubbolzen einer Reihe (I - VII) jeweils gemeinsam festgelegt und/oder freigegeben werden.

17. Verfahren nach Anspruch 16,
**dadurch gekennzeichnet,**
**dass** die Hubbolzen (9) in Abhängigkeit von der Form, den Abmessungen und der Lage des Werkstücks (3) betätigt werden, und dass nur die Hubbolzen angehoben werden, die vom Werkstück nach dessen Auflegen auf die Hubbolzen vollständig überdeckt werden.

18. Verfahren nach Anspruch 16 oder 17,
**dadurch gekennzeichnet,**
**dass** das Werkstück (3) vor dem Anheben der Hubbolzen (9) hinsichtlich seiner Form, Abmessung und/oder Lage abgetastet wird.

19. Verfahren nach einem der Ansprüche 16 bis 18,
**dadurch gekennzeichnet,**
**dass** das Auflegen des Werkstücks auf die Hubbolzen erst nach dem Anheben der Hubbolzen in die Beschichtungsposition erfolgt.

20. Verfahren nach einem der Ansprüche 16 bis 19,
**dadurch gekennzeichnet,**
**dass** die Hubbolzen (9) derjenigen Reihen (III - VI) in der Ruheposition festgelegt werden, in denen nicht bzw. nicht vollständig vom Werkstück (3, 3a, 3b) überdeckte Hubbolzen befindlich sind, und dass anschließend die nicht festgelegten Hubbolzen nur derjenigen Zeilen (c - f) von der Ruheposition in die Beschichtungsposition angehoben werden, in denen diese nicht festgelegten Hubbolzen vollständig vom Werkstück überdeckt sind.

21. Verfahren nach einem der Ansprüche 16 bis 19,
**dadurch gekennzeichnet,**
**dass** die Hubbolzen (9) derart reihenweise angehoben werden, dass für jede Reihe die Hubbolzen nur derjenigen Zeilen betätigt werden, in denen ein in dieser Reihe befindlicher anzuhebender Hubbolzen angeordnet ist, und dass anschließend alle Hubbolzen dieser Reihe in ihrer jeweiligen Höhenposition festgelegt werden.

22. Verfahren nach Anspruch 21,
**dadurch gekennzeichnet,**
**dass** vor dem Anheben der Hubbolzen einer Reihe jeweils nur die Hubbolzen dieser Reihe freigegeben werden, während die Hubbolzen der anderen Reihen festgelegt bleiben.

23. Verfahren nach Anspruch 21 oder 22,
**dadurch gekennzeichnet,**
**dass** das Freigeben, Anheben und Festlegen der Hubbolzen mehrerer Reihen mit in den gleichen Zeilen angeordneten anzuhebenden Hubbolzen gleichzeitig erfolgt.

24. Verfahren nach einem der Ansprüche 16 bis 23, umfassend die folgenden Verfahrensschritte:
a) Abtasten des zu bearbeitenden Werkstücks (3, 3a, 3b) hinsichtlich seiner Form, Abmessung und/oder Lage,
b) Erzeugen einer Werkstückinformation aus den Abtastdaten,
c) Ansteuern eines Auflegersystems mit einer Vielzahl von rasterförmigen in Reihen (I - VII) und Zeilen (a - g) angeordneten und zum Auflagern des Werkstücks vor und/oder während dessen Bearbeitens dienenden Hubbolzen (9) mit Hilfe der Werkstückinformation derart, dass die vom Werkstück nach dessen Auflegen vollständig überdeckten Hubbolzen (9) reihenweise durch jeweils ein auf alle Hubbolzen einer Zeile einwirkendes Betätigungsinittel von ihrer unteren Ruheposition in ihre obere Beschichtungsposition angehoben werden,
c1) wobei für jede Reihe (1) die Betätigungsmittel derjenigen Zeilen (c - f) aktiviert werden, in denen ein in dieser Reihe befindlicher anzuhebender Hubbolzen (9c - 9f) angeordnet ist, und
c2) wobei anschließend alle Hubbolzen (9a - 9g) dieser Reihe in ihrer jeweiligen Höhenposition durch ein gemeinsames Arretiermittel festgelegt werden, und
c3) wobei Verfahrensschritt c1) und anschließend Verfahrerisschritt c2) nacheinander für alle weiteren Reihen (II, VII) durchgeführt wird, in denen sich ein anzuhebender Hubbolzen (9c - 9f) befindet,
d) Auflegen des Werkstücks auf die angehobenen Hubbolzen (9, 9c - 9f, Ic - If, IIc - IIf, VIIc - VIIf), und
e) Beschichten des Werkstücks, insbesondere des plattenförmigen Möbelteils.

25. Verfahren nach Anspruch 24,
**dadurch gekennzeichnet,**
**dass** vor Durchführung des Verfahrensschritts c1) für eine Reihe (1) die Hubbolzen (9, 9a - 9g) nur dieser Reihe durch das zugehörige gemeinsame Arretiermittel freigegeben werden, während die Hubbolzen der restlichen Reihen (II - VII) durch deren Arretiermittel festgelegt bleiben.

## Claims

1. Device for multi-sided coating of workpieces, in particular of furniture parts in the form of panels, by means of a feeder system, comprising a base plate (5) with a plurality of lifting bolts (9) which are distributed in a grid-like manner over the base plate and can be vertically adjusted relative to the base plate between a retracted rest position and an extended coating position, wherein actuating means (12) are provided for vertical adjustment of the lifting bolts and locking means (13) for fixing individual lifting bolts in the desired vertical position, wherein the lifting bolts are distributed in a grid-like manner and arranged in rows (10) and lines (11) in such a way that each lifting bolt is allocated to a row and a line in each case, and that an actuating means (12) which can be separately activated and acts upon all the lifting bolts of the line are allocated to each line, **characterised in that** locking means (13) which can be separately activated and act upon all lifting bolts of the row are allocated to each row.

2. Device for coating of workpieces in the form of panels as claimed in Claim 1, **characterised in that** the actuating means (12) operates pneumatically.

3. Device for coating workpieces in the form of panels as claimed in one of the preceding claims, **characterised in that** the locking means (13) acts mechanically on the lifting bolts (9) and fixes them in the desired vertical position.

4. Device for coating workpieces in the form of panels as claimed in Claim 3, **characterised in that** the lifting bolts (9) are fixed by the locking means (13) by way of a locking element which engages positively with the lifting bolts.

5. Device for coating workpieces in the form of panels as claimed in Claim 4, **characterised in that** the locking element (13) comprises a bar which acts on all the lifting bolts (9) of the same row (10) and can move horizontally between a fixed position and a released position.

6. Device for coating workpieces in the form of panels as claimed in cone of the preceding claims, **characterised in that** each lifting bolt (9) is disposed in alignment with the other lifting bolts of its row or its line.

7. Device for coating workpieces in the form of panels as claimed in any one of the preceding claims, **characterised in that** the feeder system (8) with the lifting bolts (9) is disposed in a press.

8. Device for coating workpieces in the form of panels as claimed in one of the preceding claims, **characterised in that** the lifting bolts (9) are integrated in the pallet (1).

9. Device for coating workpieces in the form of panels as claimed in any one of the preceding claims, **characterised in that** a scanning device (6) is additionally provided which scans the shape, dimensions and/or position of the workpiece (3) to be processed and creates workpiece information therefrom, and that the actuating means (12) and the locking means (13) can be activated taking account of the workpiece information.

10. Device for coating workpieces in the form of panels as claimed in Claim 9, **characterised in that** the scanning device (6) optically scans the workpiece (3).

11. Device for coating workpieces in the form of panels as claimed in Claim 9 or 10, **characterised in that** the scanning device (6) is disposed outside a press (8) and scans the workpiece (3) before it is transported into the press.

12. Device for coating workpieces in the form of panels as claimed in any one of the preceding claims, **characterised in that** an optimisation device is provided which calculates an occupancy pattern taking account of the workpiece information which considers the shape, the dimensions and/or the position of the workpiece to be processed, and that the actuating means and the locking means can be activated taking account of this occupancy pattern.

13. Device for coating workpieces in the form of panels as claimed in any one of Claims 9 to 11, **characterised in that** a control device is connected upstream of the actuating means (12) and the locking means (13) and controls the actuating means and the locking means as a function of the workpiece information.

14. Device for coating workpieces in the form of panels as claimed in Claim 13, **characterised in that** the control device only activates the actuating means (12) in the line (11) of which lifting bolts (9) which are completely covered by the workpiece are located.

15. Device for coating workpieces in the form of panels as claimed in Claim 13 or 4, **characterised in that** after the activation of the actuating means (12) the control device activates the locking means (13) for locking the lifting bolts in the row (10) of which lifting bolts (9) which are completely covered by the workpiece are located.

16. Method of using the device as claimed in Claim 1, **characterised in that** the lifting bolts (9) of a line (a-g) are in each case actuated jointly, and that the lifting bolts of a row (I-VII) are in each case fixed and/or released jointly.

17. Method as claimed in Claim 16, **characterised in that** the lifting bolts (9) are actuated as a function of the shape, the dimensions and the position of the workpiece (3), and that only those lifting bolts which are completely covered by the workpiece after it has been placed onto the lifting bolts are raised.

18. Method as claimed in Claim 16 or 17, **characterised in that** the workpiece (3) is scanned with respect to its shape, dimensions and/or position before raising of the lifting bolts (9).

19. Method as claimed in any one of Claims 16 to 18, **characterised in that** the workpiece is only placed on the lifting bolts after the lifting bolts have been raised into the coating position.

20. Method as claimed in any one of Claims 16 to 19, **characterised in that** the lifting bolts (9) of those rows (III-VI) in which lifting bolts which are not or are not completely covered by the workpiece (3, 3a, 3b) are located are fixed in the rest position, and that then the lifting bolts of only those rows (c-f) in which these lifting bolts are which are not fixed are completely covered by the workpiece are raised from the rest position into the coating position.

21. Method as claimed in any one of Claims 16 to 19, **characterised in that** the lifting bolts (9) are raised row by row in such a way that the lifting bolts of only those lines in which a lifting bolt to be raised is located are actuated, and that then all lifting bolts of this row are fixed in their respective vertical position.

22. Method as claimed in Claim 21, **characterised in that** before the lifting bolts of a row are raised only the lifting bolts of this row are released in each case whilst the lifting bolts of the other rows remain fixed.

23. Method as claimed in Claim 21 or 22, **characterised in that** the lifting bolts of a plurality of rows are released, raised and fixed simultaneously with the lifting bolts disposed in the same line which are to be raised.

24. Method as claimed in any one of Claims 16 to 23, comprising the following method steps:
a) scanning of the workpiece (3, 3a, 3b) to be processed with respect to the shape, dimensions and/or position thereof,
b) producing workpiece information data from the scanned data,
c) controlling a feeder system with a plurality of lifting bolts (9) which are disposed in the form of a grid in rows (I-VII) and lines (a-g) and serve for placing the workpiece before and/or during processing thereof with aid of the workpiece information in such a way that the lifting bolts (9) completely covered by the workpiece after it has been placed thereon are raised row by row from their lower rest position into their upper coating position by actuating means which acting in each case on all lifting bolts of a line,
c1) wherein for each row (I) the actuating means of those lines (c-f) in which a lifting bolt (9c-9f) located in this row is to be raised are activated, and
c2) wherein all lifting bolts (9c-9f) of this row are then locked in their respective vertical position by common locking means, and
c3) wherein method step c1) and then method step c2) are carried out one after the other for all further rows (II, VII) in which lifting bolts (9c-9f) to be raised are located,
d) placing the workpiece onto the raised lifting bolts (9, 9c-9f, Ic-If, IIc-IIf, VIIc-VIIf), and
e) coating the workpiece, in particular the furniture part in the form of a panel.

25. Method as claimed in Claim 24, **characterised in that** before the method step (c1) is carried out for a row (I) the lifting bolts (9, 9a-9g) of only this row are released by the appertaining common locking means, whilst the lifting bolts of the remaining rows (II-VII) remain fixed by the locking means thereof.

## Revendications

1. Dispositif pour revêtir des pièces sur plusieurs faces, notamment des éléments de meubles en forme de panneaux, au moyen d'un système de support, comprenant une plaque de base (5) avec une pluralité de broches de levage (9) qui sont disposées en étant réparties à la manière d'un quadrillage sur la plaque de base et qui peuvent être déplacées en hauteur par rapport à la plaque de base entre une position de repos rentrée et une position de revêtement déployée, sachant que sont prévus des moyens d'actionnement (12) pour le déplacement en hauteur des broches de levage et des moyens de blocage (13) pour immobiliser des broches de levage individuelles dans la position en hauteur souhaitée, sachant que les broches de levage réparties à la manière d'un quadrillage sont disposées en rangées (10) et en lignes (11) de telle sorte que chaque broche de levage est associée à une rangée respective et une ligne respective, et qu'est associé à chaque rangée un moyen de blocage (13) séparément activable qui sollicite toutes les broches de levage de la rangée,
**caractérisé en ce qu'**est associé à chaque ligne un moyen d'actionnement (12) séparément activable qui sollicite toutes les broches de levage de la ligne.

2. Dispositif pour revêtir des pièces en forme de panneaux selon la revendication 1, **caractérisé en ce que** le moyen d'actionnement (12) fonctionne de façon pneumatique.

3. Dispositif pour revêtir des pièces en forme de panneaux selon l'une des revendications précédentes, **caractérisé en ce que** le moyen de blocage (13) sollicite les broches de levage (9) et les immobilise dans la position en hauteur souhaitée de façon mécanique.

4. Dispositif pour revêtir des pièces en forme de panneaux selon la revendication 3, **caractérisé en ce que** l'immobilisation des broches de levage (9) par le moyen de blocage (13) s'effectue au moyen d'un élément de blocage entrant en engagement positif avec les broches de levage.

5. Dispositif pour revêtir des pièces en forme de panneaux selon la revendication 4, **caractérisé en ce que** l'élément de blocage (13) consiste en une barre qui sollicite toutes les broches de levage (9) de la même rangée (10) et qui peut être déplacée horizontalement entre une position d'immobilisation et une position de libération.

6. Dispositif pour revêtir des pièces en forme de panneaux selon l'une des revendications précédentes, **caractérisé en ce que** chaque broche de levage (9) est disposée en alignement avec les autres broches de levage de sa rangée respective et de sa ligne respective.

7. Dispositif pour revêtir des pièces en forme de panneaux selon l'une des revendications précédentes, **caractérisé en ce que** le système de support (8) pourvu des broches de levage (9) est disposé dans une presse.

8. Dispositif pour revêtir des pièces en forme de panneaux selon l'une des revendications précédentes, **caractérisé en ce que** les broches de levage (9) sont intégrées dans une palette (1).

9. Dispositif pour revêtir des pièces en forme de panneaux selon l'une des revendications précédentes, **caractérisé en ce qu'**il est en outre prévu un dispositif de balayage (6) qui détecte la forme, les dimensions et/ou la position de la pièce (3) à traiter et établit d'après cela une information de pièce, et **en ce que** les moyens d'actionnement (12) et les moyens de blocage (13) peuvent être activés en tenant compte de l'information de pièce.

10. Dispositif pour revêtir des pièces en forme de panneaux selon la revendication 9, **caractérisé en ce que** le dispositif de balayage (6) balaye la pièce (3) optiquement.

11. Dispositif pour revêtir des pièces en forme de panneaux selon la revendication 9 ou 10, **caractérisé en ce que** le dispositif de balayage (6) est disposé en dehors d'une presse (B) et balaye la pièce (3) avant son transport dans la presse.

12. Dispositif pour revêtir des pièces en forme de panneaux selon l'une des revendications précédentes, **caractérisé en ce qu'**il est prévu un dispositif d'optimisation qui calcule un dessin d'occupation en tenant compte de l'information de pièce prenant en compte la forme, les dimensions et/ou la position de la pièce à traiter, et **en ce que** les moyens d'actionnement et les moyens de blocage peuvent être activés en tenant compte de ce dessin d'occupation.

13. Dispositif pour revêtir des pièces en forme de panneaux selon l'une des revendications 9 à 11, **caractérisé en qu'**un dispositif de commande est relié en amont aux moyens d'actionnement (12) et aux moyens de blocage (13), dispositif qui commande les moyens d'actionnement et les moyens de blocage en fonction de l'information de pièce.

14. Dispositif pour revêtir des pièces en forme de panneaux selon la revendication 13, **caractérisé en ce que** le dispositif de commande active uniquement les moyens d'actionnement (12) dans les lignes (11) desquels se trouvent des broches de levage (9) totalement recouvertes par la pièce.

15. Dispositif pour revêtir des pièces en forme de panneaux selon la revendication 13 ou 14, **caractérisé en ce qu'**à la suite de l'activation des moyens d'actionnement (12), le dispositif de commande active, afin d'immobiliser les broches de levage, les moyens de blocage (13) dans la rangée (10) desquels se trouvent des broches de levage (9) totalement recouvertes par la pièce.

16. Procédé d'utilisation du dispositif selon la revendication 1, **caractérisé en ce que** les broches de levage (9) d'une ligne respective (a - g) sont conjointement actionnées, et **en ce que** les broche de levage d'une rangée respective (I - VII) sont conjointement immobilisées et/ou libérées.

17. Procédé selon la revendication 16, **caractérisé en ce que** les broches de levage (9) sont actionnées en fonction de la forme, des dimensions et de la position de la pièce (3), et **en ce que** sont seules relevées les broches de levage qui sont totalement recouvertes par la pièce à la suite de la pose de celle-ci sur les broches de levage.

18. Procédé selon la revendication 16 ou 17, **caractérisé en ce qu'**on détecte par balayage la forme, les dimensions et/ou la position de la pièce (3) avant de relever les broches de levage (9).

19. Procédé selon l'une des revendications 16 à 18, **caractérisé en ce que** la pose de la pièce sur les broches de levage ne s'effectue qu'après le relèvement des broches de levage dans la position de revêtement.

20. Procédé selon l'une des revendications 16 à 19, **caractérisé en ce qu'**on immobilise dans la position de repos les broches de levage (9) des rangées (III - VI) dans lesquelles se trouvent des broches de levage qui ne sont pas ou ne sont pas totalement recouvertes par la pièce (3, 3a, 3b), et **en ce qu'**on relève ensuite de la position de repos dans la position de revêtement uniquement les broches de levage non immobilisées des lignes (c - f) dans lesquelles ces broches de levage non immobilisées sont totalement recouvertes par la pièce.

21. Procédé selon l'une des revendications 16 à 19, **caractérisé en ce que** les broches de levage (9) sont relevées rangée par rangée de telle sorte que, pour chaque rangée, on actionne uniquement les broches de levage des lignes dans lesquelles une broche de levage à relever se trouve dans cette rangée, et **en ce qu'**on immobilise ensuite dans leur position en hauteur respective toutes les broches de levage de cette rangée.

22. Procédé selon la revendication 21, **caractérisé en ce qu'**avant de relever les broches de levage d'une rangée respective, on libère uniquement les broches de levage de cette rangée, tandis que les broches de levage des autres rangées restent immobilisées.

23. Procédé selon la revendication 21 ou 22, **caractérisé en ce que** la libération, le relevage ou l'immobilisation des broches de levage de plusieurs rangées ayant des broches de levage à relever disposées dans les mêmes lignes s'effectue simultanément.

24. Procédé selon l'une des revendications 16 à 23, comprenant les étapes suivantes :
a) détection par balayage de la forme, des dimensions et/ou de la position de la pièce (3, 3a, 3b) à traiter,
b) production d'une information de pièce à partir des données détectées,
c) à l'aide de l'information de pièce, asservissement d'un système de support, pourvu d'une pluralité de broches de levage (9) disposées en un quadrillage de rangées (I - VII) et de lignes (a - g) et servant à supporter la pièce avant et/ou pendant son traitement, de telle sorte que les broches de levage (9) totalement recouvertes par la pièce à la suite de la pose de celle-ci sont relevées rangée par rangée, par des moyens d'actionnement agissant chacun sur toutes les broches de levage d'une ligne, de leur position inférieure de repos dans leur position supérieure de revêtement,
c1) sachant que, pour chaque rangée (I), on active les moyens d'actionnement des lignes (c - f) dans lesquelles est disposée une broche de levage à relever (9c - 9f) qui se trouve dans cette rangée, et
c2) sachant qu'ensuite, par un moyen de blocage commun, on immobilise toutes les broches de levage (9a - 9g) de cette rangée dans leur position en hauteur respective, et
c3) sachant que l'étape c1) puis l'étape c2) sont exécutées successivement pour toutes les autres rangées (II, VII) dans lesquelles se trouve une broche de levage (9c - 9f) à relever,
d) pose de la pièce sur les broches de levage relevées (9, 9c - 9f, Ic - If, IIc - IIf, VIIc - VIIf), et
e) revêtement de la pièce, notamment de l'élément de meuble en forme de panneau.

25. Procédé selon la revendication 24, **caractérisé en ce que**, avant l'exécution de l'étape c1) pour une rangée (I), seules les broches de levage (9, 9a - 9g) de cette rangée sont libérées par le moyen de blocage commun associé, tandis que les broches de levage des autres rangées (II - VII) restent immobilisées par leurs moyens de blocage.
